# EUROPÄISCHE PATENTSCHRIFT

(11) **EP 1 881 168 B1**
(45) Veröffentlichungstag und Bekanntmachung des Hinweises auf die Patenterteilung: **20.05.2009**
(21) Anmeldenummer: 07010604.2
(22) Anmeldetag: 29.05.2007
(51) Int. Cl.: F01L 1/344, F01L 1/047, B23P 11/02

(54) **Vorrichtung und Verfahren zum Einstellen der Position eines Nockenwellenverstellers relativ zu einer Nockenwelle**
Device and method for adjusting the position of a camshaft adjuster
Dispositif et procédé destinés au réglage de la position d'un dispositif de réglage d'arbre à came par rapport à un arbre à came

(30) Priorität: 22.07.2006 DE 102006033977
(43) Veröffentlichungstag der Anmeldung: 23.01.2008
(73) Patentinhaber: Dr. Ing. h.c. F. Porsche Aktiengesellschaft, 70435 Stuttgart (DE)
(72) Erfinder: Schwarzenthal, Dietmar, 71254 Ditzingen (DE); Buck, Walter, 71638 Ludwigsburg (DE); Laudenbach, Thomas, 74385 Pleidelsheim (DE)

(56) Entgegenhaltungen:
- EP-A- 1 443 185
- EP-A- 1 471 215
- DE-A1-7102004 035 07
- DE-B3- 10 330 449
- FR-A- 1 350 426
- US-A- 5 495 776

## Beschreibung

Die Erfindung betrifft eine Vorrichtung und ein Verfahren zum Einstellen der Position eines Nockenwellenverstellers relativ zu einer Nockenwelle, die kraftschlüssig mit einer Nockenwellenaufnahme des Nockenwellenverstellers verbunden ist.

Aus der EP 1 417 215 A2 ist eine Vorrichtung der eingangs genannten Art bekannt. Ein Rotor des Nockenwellenverstellers ist auf einem Zylinderteil der Nockenwelle mit einem Presssitz gelagert und dadurch kraftschlüssig und drehfest mit der Nockenwelle verbunden. Die FR 1 350 426 A zeigt eine Verbindung zwischen einem Antriebszahnrad und einer Nockenwelle. Über eine radial in dem Antriebszahnrad verlaufende Druckmediumverbindung wird eine Ringnut mit Druckmedium versorgt, so dass die kraftschlüssige Verbindung zwischen Antriebszahnrad und Nockenwelle lösbar ist.

Aus der deutschen Offenlegungsschrift DE 10 2004 026 863 A1 ist ein Nockenwellenversteller mit einem nockenwellenfesten Abtriebsteil bekannt, das kraftschlüssig an der Nockenwelle oder einer Verlängerung der Nockenwelle befestigt ist. Aus der deutschen Patentschrift DE 103 30 449 B3 ist ein Nockenwellenversteller mit einem Stator und einem Rotor und zwei jeweils stirnseitig an den Stator und den Rotor in axialer Richtung anlegbaren Anlaufscheiben bekannt. Der Stator und die erste Anlaufscheibe sind über eine zylinderförmige Fläche reibschlüssig mit der Nockenwelle verbunden. Aus der deutschen Offenlegungsschrift DE 44 41 872 A1 ist eine Anordnung eines Nockenwellenzahnrades und eines ein Einspritzpumpenzahnrad antreibenden Antriebsrades auf einer Nockenwelle bekannt, wobei das Nockenwellenzahnrad des Antriebsrads mit seiner Nabe über einen Presssitz mit der Nockenwelle verbunden ist. Die Nabe ist auf die Nockenwelle aufgeschrumpft.

Aufgabe der Erfindung ist es, das Einstellen der Position des Nockenwellenverstellers relativ zu der Nockenwelle zu vereinfachen.

Die Aufgabe ist bei einer Vorrichtung zum Einstellen der Position eines Nockenwellenverstellers relativ zu einer Nockenwelle, die kraftschlüssig mit einer Nockenwellenaufnahme des Nockenwellenverstellers verbunden ist, dadurch gelöst, dass die Nockenwellenaufnahme über eine Druckmediumverbindung so mit einem Druckmedium beaufschlagbar ist, dass die kraftschlüssige Verbindung zwischen der Nockenwellenaufnahme und der Nockenwelle zum Einstellen der Position des Nockenwellenverstellers relativ zu der Nockenwelle lösbar ist. Erfindungsgemäß ist dafür vorgesehen, dass die Nockenwelle an einem Ende einen Nockenwellenabschnitt oder Nockenwellenzapfen aufweist, der kraftschlüssig mit der Nockenwellenaufnahme des Nockenwellenverstellers verbunden und mit der Druckmediumverbindung ausgestattet ist. Vorzugsweise ist der Nockenwellenzapfen oder Nockenwellenabschnitt einstückig mit der Nockenwelle verbunden und rotationssymmetrisch ausgebildet.

Die Verbindung zwischen der Nockenwellenaufnahme und der Nockenwelle ist vorzugsweise als Presspassung ausgeführt. Damit die von den Nocken der Nockenwelle vorgegebenen Steuerzeiten auf die Ventile einer Brennkraftmaschine übertragen werden können, ist eine genaue Positionierung des Nockenwellenverstellers relativ zu der Nockenwelle notwendig. Durch eine gezielte Beaufschlagung der Nockenwellenaufnahme mit dem Druckmedium wird auf einfache Art und Weise ein kurzzeitiges Lösen der kraftschlüssigen Verbindung ermöglicht, um den Nockenwellenversteller relativ zu der Nockenwelle zu positionieren. Nach erfolgter Einstellung wird der durch das Druckmedium auf die Nockenwellenaufnahme ausgeübte Druck wieder abgebaut, um die kraftschlüssige Verbindung, das heißt den Presssitz beziehungsweise die Presspassung, wieder herzustellen.

Ein bevorzugtes Ausführungsbeispiel der Vorrichtung ist dadurch gekennzeichnet, dass der Nockenwellenzapfen oder Nockenwellenabschnitt radial außen mindestens eine Ausnehmung aufweist, die in radialer Richtung von der Nockenwellenaufnahme begrenzt wird und über die Druckmediumverbindung mit dem Druckmedium beaufschlagbar ist. Vorzugsweise sind mehrere Ausnehmungen in axialer und/oder in radialer Richtung so über den Nockenwellenzapfen oder Nockenwellenabschnitt verteilt, dass die Nockenwellenaufnahme gleichmäßig mit dem Druckmedium beaufschlagt wird.

Ein weiteres bevorzugtes Ausführungsbeispiel der Vorrichtung ist dadurch gekennzeichnet, dass die Ausnehmung von einer Radialnut gebildet wird. Dadurch wird erreicht, dass die Nockenwellenaufnahme im Bereich der Radialnut über den gesamten Umfang des Nockenwellenzapfens oder Nockenwellenabschnitts mit dem Druckmedium beaufschlagt wird.

Ein weiteres bevorzugtes Ausführungsbeispiel der Vorrichtung ist dadurch gekennzeichnet, dass mindestens ein Druckmediumverbindungskanal in die Ausnehmung mündet. Über den Druckmediumverbindungskanal gelangt das Druckmedium in die Ausnehmung.

Ein weiteres bevorzugtes Ausführungsbeispiel der Vorrichtung ist dadurch gekennzeichnet, dass der Druckmediumverbindungskanal von einem Hohlraum im Inneren des Nockenwellenzapfens oder Nockenwellenabschnitts ausgeht. Vorzugsweise erstreckt sich der Druckmediumverbindungskanal in radialer Richtung und wird von einer Bohrung gebildet.

Ein weiteres bevorzugtes Ausführungsbeispiel der Vorrichtung ist dadurch gekennzeichnet, dass der Hohlraum zu dem freien Ende des Nockenwellenzapfens oder Nockenwellenabschnitts hin ein Druckmediumverbindungsloch aufweist. Durch das Druckmediumverbindungsloch gelangt das Druckmedium in den Nockenwellenzapfen oder Nockenwellenabschnitt.

Ein weiteres bevorzugtes Ausführungsbeispiel der Vorrichtung ist dadurch gekennzeichnet, dass der Nockenwellenversteller neben der Nockenwellenaufnahme eine Steuerventilaufnahme aufweist. Die Steuerventilaufnahme dient zur Aufnahme eines Steuerventils, mit dem der Nockenwellenversteller gesteuert wird.

Ein weiteres bevorzugtes Ausführungsbeispiel der Vorrichtung ist dadurch gekennzeichnet, dass die Gestalt einer Drucklanze so an den Hohlraum und/oder die

Steuerventilaufnahme angepasst ist, dass die Drucklanze in den Hohlraum und/oder die Steuerventilaufnahme einführbar und über die Druckmediumverbindung so mit dem Druckmedium beaufschlagbar ist, dass die kraftschlüssige Verbindung zwischen der Nockenwellenaufnahme und der Nockenwelle zum Einstellen der Position des Nockenwellenverstellers relativ zu der Nockenwelle lösbar ist. Die Drucklanze steht mit einer Druckmediumquelle, zum Beispiel einer Druckmediumpumpe, in Verbindung, von der das Druckmedium durch die Drucklanze über die Druckmediumverbindung zu der Nockenwellenaufnahme gefördert wird.

Bei einem Verfahren zum Einstellen der Position eines Nockenwellenverstellers relativ zu einer Nockenwelle, die kraftschlüssig mit einer Nockenwellenaufnahme des Nockenwellenverstellers verbunden ist, insbesondere mit einer vorab beschriebenen Vorrichtung, die auch als System bezeichnet wird, ist die vorab angegebene Aufgabe dadurch gelöst, dass die Nockenwellenaufnahme des Nockenwellenverstellers aufgeweitet und/oder die Nockenwelle geschrumpft wird, um die Position des Nockenwellenverstellers relativ zu der Nockenwelle zu verstellen. Dafür wird die Nockenwellenaufnahme des Nockenwellenverstellers mit Hilfe eines Druckmediums, insbesondere eines Hydraulikmediums, insbesondere hydraulisch aufgeweitet. Bei dem Hydraulikmedium handelt es sich vorzugsweise um Hydrauliköl. Erfindungsgemäß wird Druckmedium mit Hilfe einer Drucklanze, die in das in der Nockenwellenaufnahme aufgenommene Ende der Nockenwelle eingeführt wird, der Nockenwellenaufnahme zugeführt. Die Drucklanze steht mit einer Druckmediumquelle, zum Beispiel einer Druckmediumpumpe, in Verbindung, von der das Druckmedium durch die Drucklanze zu der Nockenwellenaufnahme gefördert wird. Die Verbindung zwischen der Nockenwellenaufnahme und der Nockenwelle ist vorzugsweise als Presspassung ausgeführt. Damit die von den Nocken der Nockenwelle vorgegebenen Steuerzeiten auf die Ventile einer Brennkraftmaschine übertragen werden können, ist eine genaue Positionierung des Nockenwellenverstellers relativ zu der Nockenwelle notwendig. Durch ein gezieltes Aufweiten der Nockenwellenaufnahme und/oder Schrumpfen der Nockenwelle wird auf einfache Art und Weise ein kurzzeitiges Lösen der kraftschlüssigen Verbindung ermöglicht. Nach erfolgter Einstellung wird die kraftschlüssige Verbindung, das heißt der Presssitz beziehungsweise die Presspassung wieder hergestellt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Fig. 1: einen Nockenwellenversteller vor und nach der Montage auf ein Ende einer Nockenwelle im Längsschnitt;
- Fig. 2: den montierten Nockenwellenversteller vor dem Einführen einer Drucklanze im Längsschnitt;
- Fig. 3: einen Nockenwellenversteller, ein Steuerventil und ein Ende einer Nockenwelle im Längsschnitt vor der Montage;
- Fig. 4: den Nockenwellenversteller aus Fig. 3 nach der Montage auf der Nockenwelle;
- Fig. 5: den Nockenwellenversteller aus den Figuren 3 und 4 vor dem Einführen einer Drucklanze;
- Fig. 6: den Nockenwellenversteller aus Fig. 5 nach dem Einführen der Drucklanze und
- Fig. 7: den Nockenwellenversteller aus Fig. 6 nach dem Entfernen der Drucklanze mit montiertem Steuerventil.

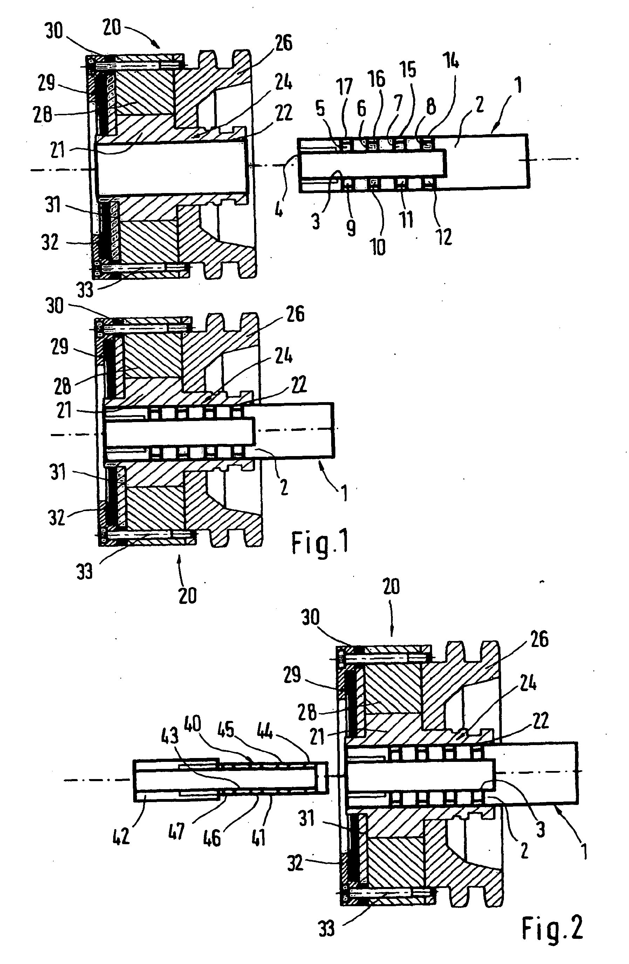

In Fig. 1 ist ein Ende einer Nockenwelle 1 im Längsschnitt dargestellt. Die Nockenwelle 1 weist (nicht dargestellte) Nocken auf, die in bekannter Art und Weise dazu dienen, die Hubbewegung von Ventilen eines Kolbenmotors zu steuern. An dem freien Ende der Nockenwelle 1 ist ein Nockenwellenzapfen 2 ausgebildet, der innen einen Hohlraum 3 aufweist. An seinem freien Ende weist der Nockenwellenzapfen 2 ein Druckmediumdurchgangsloch 4 auf, das den Zugang zu dem Hohlraum 3, zum Beispiel mit einer Drucklanze, ermöglicht. In radialer Richtung gehen von dem Hohlraum 3 eine Vielzahl von Radialbohrungen 5 bis 12 aus. Jeweils zwei der Radialbohrungen 5, 9; 6, 10; 7, 11; 8, 12 münden in Radialnuten 14 bis 17, die in dem Nockenwellenzapfen 2 ausgespart sind. Das Druckmediumdurchgangsloch 4, der Hohlraum 3, die Radialbohrungen 5 bis 12 und die Radialnuten 14 bis 17 schaffen eine Druckmediumverbindung von dem freien Ende der Nockenwelle 1 zu ihrem äußeren Umfang im Bereich der Radialnuten 14 bis 17.

In Fig. 1 ist des Weiteren ein Nockenwellenversteller 20 mit einer Nabe 21 im Längsschnitt dargestellt, die ein zentrales Durchgangsloch 22 aufweist. Das von der Nabe 21 begrenzte Durchgangsloch 22 bildet eine Nockenwellenaufnahme 24 für den Nockenwellenzapfen 2 der Nockenwelle 1. Der Nockenwellenversteller 20 weist ein Antriebsrad 26 auf, das fest mit einem Stator verbunden ist. Ein mit der Nabe 21 verbundener Rotor ist als Flügelrad ausgebildet und in bekannter Art und Weise relativ zu dem Stator verdrehbar. Der bekannte Verstellmechanismus wird durch eine Hydraulikmediumquelle, zum Beispiel eine Hydraulikmediumpumpe, angetrieben, um die Fasenlage des Antriebsrads 26 zum Stator und damit der Nockenwelle 1 zu einer (nicht dargestellten) Kurbelwelle zu verstellen oder zu halten. Der Aufbau und die Funktion der Teile 28 bis 33 werden als bekannt vorausgesetzt und daher hier nicht weiter erläutert.

Der Nockenwellenversteller 20 wird in einem Ottomotor zur Veränderung der Steuerzeiten eingesetzt und ist üblicherweise zwischen der Nockenwelle 1 und einem Steuertrieb angeordnet. Da alle Kräfte und Momente, die durch den Steuertrieb und den Ventiltrieb aufgebracht werden, durch den Nockenwellenversteller 20 übertragen werden müssen, ist die Anbindung des Nockenwellenverstellers 20 an die Nockenwelle 1 erheblich belastet. In Fig. 1 oben ist der Nockenwellenversteller 20 vor dem Montieren auf den Nockenwellenzapfen 2 dargestellt. In Fig. 1 unten ist der Nockenwellenversteller 20 mit seiner Nabe 21 kraftschlüssig mit dem Nockenwellenzapfen 2 verbunden. Zu diesem Zweck sind der Durchmesser des zentralen Durchgangslochs 22 der Nabe 21 und der Außendurchmesser des Nockenwellenzapfens 2 so dimensioniert, dass bei einer Montage eine Presspassung entsteht, welche die im Betrieb auftretenden Kräfte und Momente kraftschlüssig überträgt. Die Montage des Nockenwellenverstellers 20 auf der Nockenwelle erfolgt vorzugsweise durch thermisches Schrumpfen des Nockenwellenzapfens 2.

Damit die von den Nocken der Nockenwelle 1 vorgegebenen Steuerzeiten auf die Ventile übertragen werden können, ist eine genaue Relativpositionierung zwischen der Nockenwelle 1 und dem Nockenwellenversteller 20 notwendig. Gemäß einem wesentlichen Aspekt der vorliegenden Erfindung ist der Hohlraum 3 im Inneren des Nockenwellenzapfens 2 über das Druckmediumdurchgangsloch 4 mit einem Druckmedium beaufschlagbar. Über die Radialbohrungen 5 bis 12 gelangt das Druckmedium in die Radialnuten 14 bis 17, wo es die Nabe 21 an deren innerem Umfang beaufschlagt.

In Fig. 2 ist eine Drucklanze 40 im Längsschnitt dargestellt, die einen im Wesentlichen kreiszylindermantelförmigen Lanzenkörper 41 aufweist, der von einem Anschlusskörper 42 ausgeht. Im Inneren des Lanzenkörpers 41 ist ein Hohlraum 43 ausgebildet, der mit einer Druckmediumquelle, zum Beispiel einer Hydraulikpumpe, in Verbindung steht. Von dem Hohlraum 43 erstrecken sich Radialbohrungen 44 bis 47 nach außen.

Der Lanzenkörper 41 ist so ausgeführt und bemessen, dass er in den Hohlraum 3 im Inneren des Nockenwellenzapfens 2 eingeführt werden kann. Im eingeführten Zustand (nicht dargestellt) des Lanzenkörpers 41 fluchten die Radialbohrungen 44 bis 47 der Drucklanze 40 mit den Radialbohrungen 5 bis 12 in dem Nockenwellenzapfen 2. Im eingeführten Zustand der Drucklanze 40 kann ein Hydraulikmedium, insbesondere Hydrauliköl, durch die Radialbohrungen 44 bis 47 der Drucklanze 40 und die Radialbohrungen 5 bis 12 des Nockenwellenzapfens 2 in die Radialnuten 14 bis 17 gefördert werden.

Durch Aufbringen von Druck kann die Presspassung zwischen der Nabe 22 beziehungsweise der Nockenwellenaufnahme 24 und dem Nockenwellenzapfen 2 durch eine hydraulische Aufweitung des zentralen Durchgangslochs 22 aufgehoben werden. In diesem Zustand kann die Position des Nockenwellenverstellers 20 relativ zu der Nockenwelle relativ kraftfrei verstellt werden, und umgekehrt. Die Presspassung wird also durch eine gezielte Druckbeaufschlagung der Radialnuten 14 bis 17 kurzzeitig gelöst, um eine Relativdrehung zwischen Nockenwelle 1 und Nockenwellenversteller 20 zur Einstellung der gewünschten Relativposition zu ermöglichen. Nach einer erfolgten Einstellung der Relativposition wird der aufgebrachte Hydrauliköldruck abgebaut, um die Presspassung zwischen der Nockenwellenaufnahme 24 und der Nockenwelle 1 wieder herzustellen.

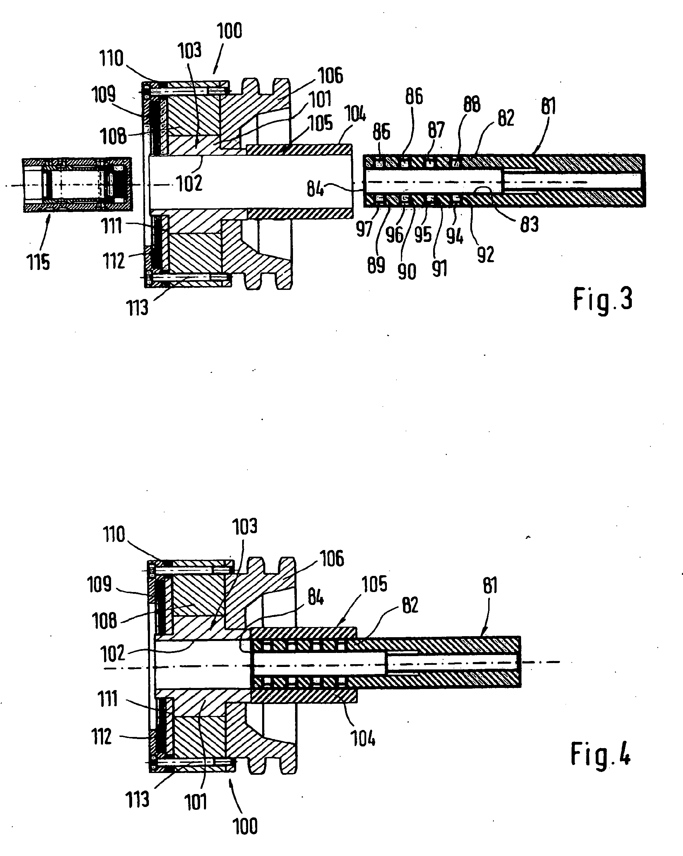

In den Figuren 3 bis 7 ist ein weiteres Ausführungsbeispiel der Erfindung in verschiedenen Montagezuständen im Längsschnitt dargestellt. In Fig. 3 ist eine Nockenwelle 81 im Längsschnitt dargestellt, die innen hohl ist. Die Nockenwelle 81 endet in einem Nockenwellenzapfen 82, der einen Hohlraum 83 aufweist. Der Hohlraum 83 wiederum ist durch ein Druckmediumdurchgangsloch 84 nach außen offen. Von dem Hohlraum 83 erstrecken sich Radialbohrungen 85 bis 92 nach außen. Die Radialbohrungen 85 bis 92 münden jeweils paarweise in Radialnuten 94 bis 97.

Ein Nockenwellenversteller 100, der dem in den Figuren 1 und 2 dargestellten Nockenwellenversteller 20 ähnelt, ist mit einer Nabe 101 ausgestattet, die ein zentrales Durchgangsloch 102 aufweist. Die Nabe 101 bildet eine Steuerventilaufnahme 103 für ein Steuerventil 115. Auf der dem Steuerventil 115, das in Fig. 3 im nicht montierten Zustand dargestellt ist, abgewandten Stirnseite der Nabe 101 ist eine Hülse 104 vorzugsweise einstückig oder stoffschlüssig mit der Nabe 101 verbunden. Die Hülse 104 bildet eine Nockenwellenaufnahme 105. Der Nockenwellenversteller 100 ist in bekannter Art und Weise mit einem Antriebsrad 106 und weiteren Teilen 108 bis 112 ausgestattet, die nicht näher erläutert werden.

In Fig. 4 ist der Nockenwellenzapfen 82 durch eine Presspassung kraftschlüssig mit der Nockenwellenaufnahme 105 verbunden. Die dargestellte Verbindung wird auch als vormontierter oder montierter Pressverband bezeichnet.

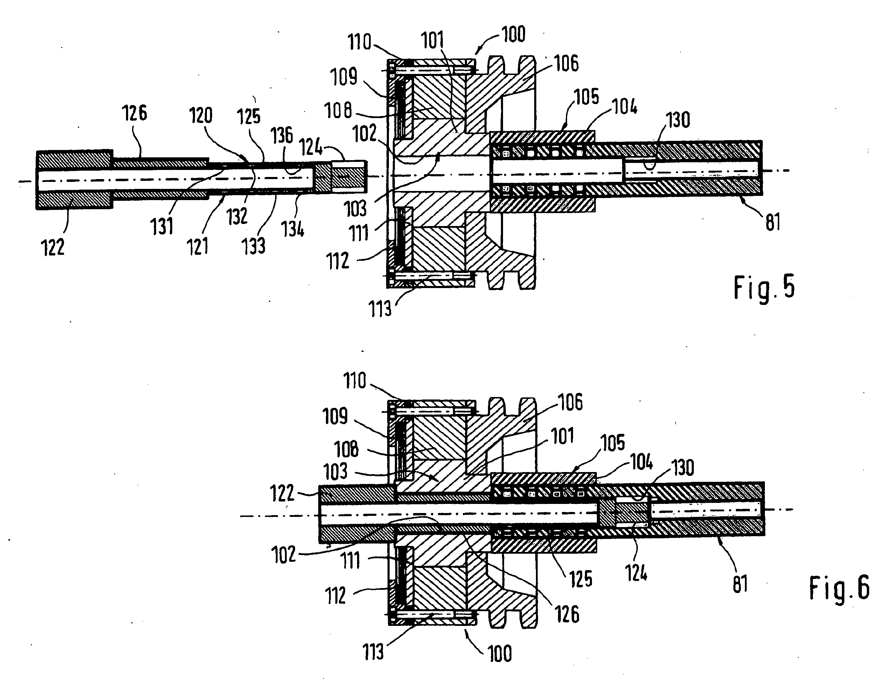

In Fig. 5 ist eine Drucklanze 120 im Längsschnitt dargestellt, die einen Lanzenkörper 121 aufweist, der von einem Anschlusskörper 122 ausgeht. Der Anschlusskörper 122 steht über eine (nicht dargestellte) Verbindungsleitung oder direkt mit einer Druckmediumquelle, insbesondere einer Hydraulikölpumpe, in Verbindung. An seinem freien Ende weist der Lanzenkörper 121 einen Verschlussabschnitt 124 auf, dessen Außenabmessungen an einen Dichtabschnitt 130 im Inneren der Nockenwelle 81 angepasst sind. Auf den Verschlussabschnitt 124 folgen ein Druckmediumverbindungsabschnitt 125 und ein Distanzabschnitt 126. Der Druckmediumverbindungsabschnitt 125 weist Radialbohrungen 131 bis 134 auf, die den Austritt von Druckmedium aus einem Hohlraum 136 in Inneren des Lanzenkörpers 121 ermöglichen. Die Radialbohrungen 131 bis 134 des Druckmediumverbindungsabschnitts 125 fluchten im eingeführten Zustand der Drucklanze 120 mit den Radialbohrungen 85 bis 92 in dem Nockenwellenzapfen 82.

In Fig. 6 ist die Drucklanze 120 im eingeführten Zustand dargestellt. Der Verschlussabschnitt 124 liegt in abdichtender Art und Weise an einem Dichtabschnitt 130 in Inneren der Nockenwelle 81 an. Der Druckmediumverbindungsabschnitt 125 befindet sich in Anlage am inneren Umfang der Nockenwellenaufnahme 105. Der Distanzabschnitt 126 befindet sich in Anlage an dem inneren Umfang der Steuerventilaufnahme 103. Im eingeführten Zustand der Drucklanze 120 gelangt das über den Anschlusskörper 122 zugeführte Druckmedium durch den Hohlraum 136, die Radialbohrungen 131 bis 134 und die Radialbohrungen 85 bis 92 in die Radialnuten 94 bis 97. Durch eine definierte Druckerhöhung in den Radialnuten 94 bis 97 kann die Nockenwellenaufnahme 105 kurzfristig gezielt aufgeweitet werden, um die Position des Nockenwellenverstellers 100 relativ zu der Nockenwelle 81 zu verändern.

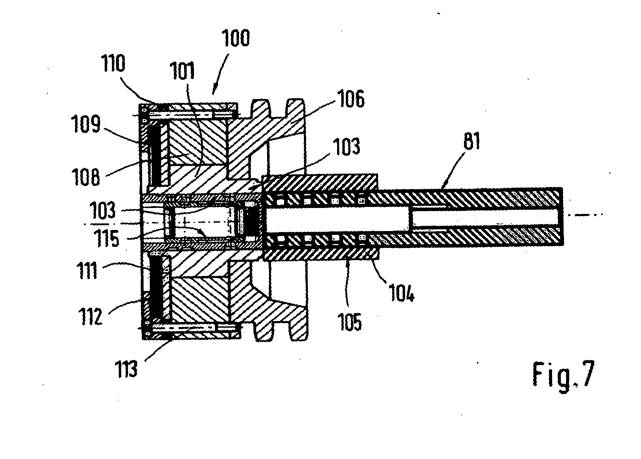

Nach dem Einstellen der Relativposition wird die Drucklanze 120 entfernt und das Steuerventil 115 wird, wie in Fig. 7 dargestellt ist, in die Steuerventilaufnahme 103 eingesetzt beziehungsweise eingepresst. Über die Steuerventilaufnahme 103 wird der Nockenwellenversteller 100 im Betrieb mit Hydraulikmedium versorgt.

## Patentansprüche

1. Vorrichtung zum Einstellen der Position eines Nockenwellenverstellers (20;100) relativ zu einer Nockenwelle (1;81), die kraftschlüssig mit einer Nockenwellenaufnahme (24;105) des Nockenwellenverstellers (20;100) verbunden ist, **dadurch gekennzeichnet, dass** die Nockenwelle (1;81) an einem Ende einen Nockenwellenabschnitt oder Nockenwellenzapfen (2;82) aufweist, der kraftschlüssig mit der Nockenwellenaufnahme (24;105) des Nockenwellenverstellers verbunden und mit einer Druckmediumverbindung ausgestattet ist, dass die Nockenwellenaufnahme (24;105) über die Druckmediumverbindung so mit einem Druckmedium beaufschlagbar ist, dass die kraftschlüssige Verbindung zwischen der Nockenwellenaufnahme (24;105) und der Nockenwelle (1;81) zum Einstellen der Position des Nockenwellenverstellers (20;100) relativ zu der Nockenwelle (1;81) lösbar ist.

2. Vorrichtung nach Anspruch 1, **dadurch gekennzeichnet, dass** der Nockenwellenzapfen (2;82) oder Nockenwellenabschnitt radial außen mindestens eine Ausnehmung aufweist, die in radialer Richtung von der Nockenwellenaufnahme (24;105) begrenzt wird und über die Druckmediumverbindung mit dem Druckmedium beaufschlagbar ist.

3. Vorrichtung nach Anspruch 2, **dadurch gekennzeichnet, dass** die Ausnehmung von einer Radialnut (14-17;94-97) gebildet wird.

4. Vorrichtung nach Anspruch 2 oder 3, **dadurch gekennzeichnet, dass** mindestens ein Druckmediumverbindungskanal (5-12;85-92) in die Ausnehmung mündet.

5. Vorrichtung nach Anspruch 4, **dadurch gekennzeichnet, dass** der Druckmediumverbindungskanal (5-12;85-92) von einem Hohlraum (3;83) im Inneren des Nockenwellenzapfens (2;82) oder Nockenwellenabschnitts ausgeht.

6. Vorrichtung nach Anspruch 5, **dadurch gekennzeichnet, dass** der Hohlraum (3;83) zu dem freien Ende des Nockenwellenzapfens (2;82) oder Nockenwellenabschnitts hin ein Druckmediumverbindungsloch (4;84) aufweist.

7. Vorrichtung nach einem der vorhergehenden Ansprüche, **dadurch gekennzeichnet, dass** der Nockenwellenversteller (100) neben der Nockenwellenaufnahme (105) eine Steuerventilaufnahme (103) aufweist.

8. Vorrichtung nach einem der Ansprüche 5 bis 7, **dadurch gekennzeichnet, dass** die Gestalt einer Drucklanze (40;120) so an den Hohlraum (3;83) und/oder die Steuerventilaufnahme (103) angepasst ist, dass die Drucklanze (40;120) in den Hohlraum (3;83) und/oder die Steuerventilaufnahme (103) einführbar und über die Druckmediumverbindung so mit dem Druckmedium beaufschlagbar ist, dass die kraftschlüssige Verbindung zwischen der Nockenwellenaufnahme (24;105) und der Nockenwelle (1;81) zum Einstellen der Position des Nockenwellenverstellers (20;100) relativ zu der Nockenwelle (1;81) lösbar ist.

9. Verfahren zum Einstellen der Position eines Nockenwellenverstellers (20;100) relativ zu einer Nockenwelle (1;81), die kraftschlüssig mit einer Nockenwellenaufnahme (24;105) des Nockenwellenverstellers (20;100) verbunden ist, insbesondere mit einer Vorrichtung nach einem der vorhergehenden Ansprüche, **dadurch gekennzeichnet, dass** die Nockenwellenaufnahme (24;105) des Nockenwellenverstellers (20;100) aufgeweitet und/oder die Nockenwelle (1;81) geschrumpft wird, um die Position des Nockenwellenverstellers (20;100) relativ zu der Nockenwelle (1;81) zu verstellen, wobei die Nockenwellenaufnahme (24;105) des Nockenwellenverstellers (20;100) mit Hilfe eines Druckmediums, insbesondere eines Hydraulikmediums, insbesondere hydraulisch aufgeweitet wird, und das Druckmedium mit Hilfe einer Drucklanze (40;120), die in das in der Nockenwellenaufnahme (24;105) aufgenommene Ende der Nockenwelle (1;81) eingeführt wird, der Nockenwellenaufnahme (24;105) zugeführt wird.

## Claims

1. Device for adjusting the position of a camshaft adjuster (20; 100) in relation to a camshaft (1; 81) which is connected in a frictionally locking fashion to a camshaft mount (24; 105) of the camshaft adjuster (20; 100), **characterized in that** the camshaft (1; 81) has, at one end, a camshaft section or camshaft journal (2; 82) which is connected in a frictionally locking fashion to the camshaft mount (24; 105) of the camshaft adjuster, and is equipped with a pressure medium connection, **in that** a pressure medium can be applied to the camshaft mount (24; 105) via the pressure medium connection in such a way that the frictionally locking connection between the camshaft mount (24; 105) and the camshaft (1; 81) for adjusting the position of the camshaft adjuster (20; 100) in relation to the camshaft (1; 81) can be disconnected.

2. Device according to Claim 1, **characterized in that** the camshaft journal (2; 82) or camshaft section has, radially on the outside, at least one recess which is limited in the radial direction by the camshaft mount (24; 105) and can have pressure medium applied to it via the pressure medium connection.

3. Device according to Claim 2, **characterized in that** the recess is formed by a radial groove (14-17; 94-97).

4. Device according to Claim 2 or 3, **characterized in that** at least one pressure medium connecting duct (5-12; 85-92) opens into the recess.

5. Device according to Claim 4, **characterized in that** the pressure medium connecting duct (5-12; 85-92) proceeds from a cavity (3; 83) in the interior of the camshaft journal (2; 82) or camshaft section.

6. Device according to Claim 5, **characterized in that** the cavity (3; 83) has a pressure medium connecting hole (4; 84) towards the free end of the camshaft journal (2; 82) or camshaft section.

7. Device according to one of the preceding claims, **characterized in that** the camshaft adjuster (100) has a control valve mount (103) next to the camshaft mount (105).

8. Device according to one of Claims 5 to 7, **characterized in that** the shape of a pressure lance (40; 120) is adapted to the cavity (3; 83) and/or the control valve mount (103) in such a way that the pressure lance (40; 120) can be introduced into the cavity (3; 83) and/or the control valve mount (103) and can have the pressure medium applied to it via the pressure medium connection in such a way that the frictionally locking connection between the camshaft mount (24; 105) and the camshaft adjuster (1; 81) for adjusting the position of the camshaft adjuster (20; 100) in relation to the camshaft (1; 81) can be disconnected.

9. Method for adjusting the position of a camshaft adjuster (20; 100) in relation to a camshaft (1; 81) which is connected in a frictionally locking fashion to a camshaft mount (24; 105) of the camshaft adjuster (20; 100), in particular with a device according to one of the preceding claims, **characterized in that** the camshaft mount (24; 105) of the camshaft adjuster (20; 100) is widened and/or the camshaft (1; 81) is shrunk in order to adjust the position of the camshaft adjuster (20; 100) in relation to the camshaft (1; 81), wherein the camshaft mount (24; 105) of the camshaft adjuster (20; 100) is widened using a pressure medium, in particular a hydraulic medium, in particular hydraulically, and the pressure medium is fed to the camshaft mount (24; 105) using a pressure lance (40; 120) which is introduced into the end of the camshaft (1; 81) which is held in the camshaft mount (24; 105).

## Revendications

1. Dispositif destiné au réglage de la position d'un dispositif de réglage d'arbre à cames (20; 100) par rapport à un arbre à cames (1; 81), qui est relié en complémentarité de force à un logement d'arbre à cames (24; 105) du dispositif de réglage d'arbre à cames (20; 100), **caractérisé en ce que** l'arbre à cames (1; 81) présente à une extrémité un bout d'arbre à cames ou un tourillon d'arbre à cames (2; 82), qui est relié en complémentarité de force au logement d'arbre à cames (24; 105) du dispositif de réglage d'arbre à cames et qui est muni d'un raccordement de fluide sous pression, **en ce que** le logement d'arbre à cames (24; 105) peut être soumis à un fluide sous pression au moyen du raccordement de fluide sous pression, de telle manière que la liaison en complémentarité de force entre le logement d'arbre à cames (24; 105) et l'arbre à cames (1; 81) puisse être séparée pour le réglage de la position du dispositif de réglage d'arbre à cames (20; 100) par rapport à l'arbre à cames (1; 81).

2. Dispositif selon la revendication 1, **caractérisé en ce que** le tourillon d'arbre à cames (2; 82) ou le bout d'arbre à cames présente radialement à l'extérieur au moins un évidement, qui est limité en direction radiale par le logement d'arbre à cames (24; 105) et qui peut être soumis au fluide sous pression au moyen du raccordement de fluide sous pression.

3. Dispositif selon la revendication 2, **caractérisé en ce que** l'évidement est formé par une rainure radiale (14-17; 94-97).

4. Dispositif selon la revendication 2 ou 3, **caractérisé en ce qu'**au moins un canal de raccordement de fluide sous pression (5-12; 85-92) débouche dans l'évidement.

5. Dispositif selon la revendication 4, **caractérisé en ce que** le canal de raccordement de fluide sous pression (5-12; 85-92) part d'une cavité (3; 83) à l'intérieur du tourillon d'arbre à cames (2; 82) ou du bout d'arbre à cames.

6. Dispositif selon la revendication 5, **caractérisé en ce que** la cavité (3; 83) présente un trou de raccordement de fluide sous pression (4; 84) en direction de l'extrémité libre du tourillon d'arbre à cames (2; 82) ou du bout d'arbre à cames.

7. Dispositif selon l'une quelconque des revendications précédentes, **caractérisé en ce que** le dispositif de réglage d'arbre à cames (100) présente un logement de soupape de commande (103) en plus du logement d'arbre à cames (105).

8. Dispositif selon l'une quelconque des revendications 5 à 7, **caractérisé en ce que** la forme d'une lance de pression (40; 120) est adaptée à la cavité (3; 83) et/ou au logement de soupape de commande (103) de telle manière que la lance de pression (40; 120) puisse être introduite dans la cavité (3; 83) et/ou dans le logement de soupape de commande (103) et qu'elle puisse être soumise au fluide sous pression au moyen du raccordement de fluide sous pression, de telle manière que la liaison en complémentarité de force entre le logement d'arbre à cames (24; 105) et l'arbre à cames (1; 81) puisse être séparée pour le réglage de la position du dispositif de réglage d'arbre à cames (20; 100) par rapport à l'arbre à cames (1; 81).

9. Procédé de réglage de la position d'un dispositif de réglage d'arbre à cames (20; 100) par rapport à un arbre à cames (1; 81), qui est relié en complémentarité de force à un logement d'arbre à cames (24; 105) du dispositif de réglage d'arbre à cames (20; 100), en particulier avec un dispositif selon l'une quelconque des revendications précédentes, **caractérisé en ce que** le logement d'arbre à cames (24; 105) du dispositif de réglage d'arbre à cames (20; 100) est dilaté et/ou l'arbre à cames (1; 81) est contracté, afin de régler la position du dispositif de réglage d'arbre à cames (20; 100) par rapport à l'arbre à cames (1; 81), dans lequel le logement d'arbre à cames (24; 105) du dispositif de réglage d'arbre à cames (20; 100) est dilaté, en particulier de façon hydraulique, à l'aide d'un fluide sous pression, en particulier d'un fluide hydraulique, et le fluide sous pression est fourni au logement d'arbre à cames (24; 105) à l'aide d'une lance sous pression (40; 120), qui est introduite dans l'extrémité de l'arbre à cames (1; 81) logée dans le logement d'arbre à cames (24; 105).
